# FASCICULE DE BREVET EUROPEEN

(11) **EP 0 724 973 B1**
(45) Date de publication et mention de la délivrance du brevet: **15.12.1999**
(21) Numéro de dépôt: 96100888.5
(22) Date de dépôt: 23.01.1996
(51) Int. Cl.: B60C 15/06

(54) **Bourrelets de pneumatique**
Reifenwulst
Tyre bead

(30) Priorité: 02.02.1995 FR 9501320
(43) Date de publication de la demande: 07.08.1996
(73) Titulaire: COMPAGNIE GENERALE DES ETABLISSEMENTS MICHELIN - MICHELIN & CIE, 63040 Clermont-Ferrand Cédex (FR)
(72) Inventeur: Billieres, Jean, F-63100 Clermont-Ferrand (FR)
(74) Mandataire: Devaux, Edmond-Yves

(56) Documents cités:
- FR-A- 1 234 995
- FR-A- 2 554 059
- GB-A- 2 111 919
- PATENT ABSTRACTS OF JAPAN vol. 008, no. 227 (M-332), 18 Octobre 1984 & JP-A-59 109406 (YOKOHAMA GOMU KK), 25 Juin 1984,
- PATENT ABSTRACTS OF JAPAN vol. 017, no. 139 (M-1385), 22 Mars 1993 & JP-A-04 317806 (YOKOHAMA RUBBER CO LTD:THE), 9 Novembre 1992,

## Description

La présente invention concerne un pneumatique à armature de carcasse radiale, et plus particulièrement à un pneumatique "Poids Lourds", destiné à équiper des véhicules tels que les camions, tracteurs routiers, autobus, remorques et autres, et dans lequel une nouvelle structure de renforcement des bourrelets est adaptée en vue de l'amélioration de l'endurance desdits bourrelets.

En général, un pneumatique du type considéré comprend une armature de carcasse formée d'au moins une nappe de câbles métalliques, ancrée dans chaque bourrelet à au moins une tringle, en formant un retournement. L'armature de carcasse est radialement surmontée d'une armature de sommet, composée d'au moins deux nappes de câbles métalliques, croisés d'une nappe à la suivante en formant avec la direction circonférentielle des angles compris entre 10° et 45°. Les retournements d'armature de carcasse sont généralement renforcés par au moins une nappe de câbles métalliques orientés à un faible angle par rapport à la direction circonférentielle.

Dans le cas de la présence d'une seule nappe de renforcement de bourrelet, cette dernière peut être située le long du retournement d'armature de carcasse avec une extrémité radialement supérieure située au dessus ou au dessous de l'extrémité radialement supérieure du retournement d'armature de carcasse. Quant à l'extrémité radialement inférieure d'une telle nappe, elle est généralement située sur une droite parallèle à l'axe de rotation et passant approximativement par le centre de gravité de la section méridienne de la tringle d'ancrage de l'armature de carcasse.

La nappe de renforcement du bourrelet peut aussi être enroulée autour de la tringle, de sorte à présenter un brin axialement extérieur et un brin axialement intérieur, l'extrémité radialement supérieure du brin axialement intérieur étant généralement située au dessous de l'extrémité radialement supérieure du brin axialement extérieur.

Dans d'autres cas, la nappe de renforcement métallique a été remplacée par plusieurs nappes, textiles par exemple, situées axialement soit du même côté du retournement, soit de part et d'autre dudit retournement, soit encore en partie le long du retournement et en partie le long de l'armature de carcasse. Une autre variante consiste à mettre deux nappes de renforcement le long du retournement, de part et d'autre dudit retournement, et une troisième nappe le long de l'armature de carcasse axialement à l'extérieur.

L'endurance des bourrelets peut aussi être améliorée en disposant le long de l'armature de carcasse deux nappes de renforcement, alors que le retournement de ladite armature n'est pas renforcée.

Toutes les solutions citées et connues ont pour but d'éviter la déradialisation des câbles du retournement de l'armature de carcasse, ainsi que de minimiser les déformations radiales et circonférentielles subies par l'extrémité dudit retournement, et ceci en évitant si possible de générer les défauts cités sur la(les) nappe(s) de renforcement de bourrelets.

GB-A-2 111 919 montre un pneumatique avec toutes les caractéristiques du préambule de la revendication 1.

La durée de vie des pneumatiques "Poids-Lourds", du fait des progrès accomplis, du fait que certains roulages sont rendus moins pénalisants en ce qui concerne l'usure de la bande de roulement, est devenue telle qu'il est encore nécessaire d'améliorer l'endurance des bourrelets, et plus particulièrement des pneumatiques soumis à des roulages prolongés, roulages induisant souvent une température élevée des bourrelets, du fait des températures atteintes par les jantes de montage. Les mélanges de caoutchouc en contact avec la jante sont alors sujets à une diminution de leurs rigidités, ainsi qu'à une oxydation plus ou moins lente, d'où une tendance très marquée de l'armature de carcasse à se dérouler autour de la tringle sous l'effet de la pression de gonflage intérieure, malgré la présence d'une ou plusieurs nappes de renforcement de bourrelets. Prennent alors naissance des mouvements de tringle, des déformations de cisaillement à toutes les extrémités de nappes, pour aboutir à la destruction du bourrelet.

Afin de remédier aux inconvénients ci-dessus, le pneumatique, conforme à l'invention, comprend une armature de carcasse radiale ancrée dans chaque bourrelet à au moins une tringle pour former un retournement, chaque bourrelet étant renforcé par au moins une nappe additionnelle de renforcement formée d'éléments métalliques. Vu en section méridienne, la nappe de renforcement est enroulée autour de la tringle, à l'extérieur de la partie enroulée de l'armature de carcasse, de sorte que les extrémités radialement supérieures respectivement du brin axialement extérieur et radialement supérieure du brin axialement intérieur soient radialement situées au dessus d'une droite parallèle à l'axe de rotation et passant par le point de la tringle le plus éloigné dudit axe de rotation. Ce pneumatique est caractérisé en ce que la nappe de renforcement est composée d'éléments métalliques circonférentiels.

L'armature de carcasse, formée de fils ou câbles radiaux, est ainsi, au niveau de sa surface de contact avec la tringle, formée, comme connu, d'éléments sensiblement circonférentiels qui sont généralement métalliques sous forme de fils, câbles, rubans ou feuillards enroulés, insérée entre lesdits éléments à orientation sensiblement circonférentielle et la nappe additionnelle d'éléments métalliques, eux aussi circonférentiels. Cette structure permet ainsi la reprise des efforts de tension subis par l'armature de carcasse, et ainsi minimise toutes les déformations en extrémités de retournement d'armature de carcasse, quelles que soient les conditions de roulage.

La reprise des efforts sera d'autant plus importante que les éléments de renforcement de la nappe additionnelle seront plus nombreux sur la surface de contact considérée ; ils seront préférentiellement jointifs pour ladite surface.

Il est aussi avantageux, afin de conférer au bourrelet de pneumatique une rigidité transversale supérieure, de prolonger radialement à l'extérieur le brin axialement intérieur de la nappe additionnelle d'éléments circonférentiels, jusqu'à une hauteur radiale au plus égale à 0,35 H, ladite hauteur radiale étant mesuré par rapport au point de la tringle radialement le plus rapproché de l'axe de rotation et H étant la hauteur sur jante du pneumatique.

L'endurance des bourrelets peut encore être améliorée par la présence d'une deuxième nappe additionnelle formée d'éléments métalliques circonférentiels, ladite nappe étant située à l'intérieur de l'armature de carcasse et de son retournement. La deuxième nappe additionnelle peut ne pas être retournée autour d'une tringle. Il est cependant avantageux qu'elle le soit en formant, comme la première nappe additionnelle, deux brins respectivement intérieur et extérieur.

Dans tous les cas de figure où la(les) nappe(s) additionnelle(s) ont des brins présentant des extrémités radialement supérieures situées au dessus du point de la tringle le plus éloigné de l'axe de rotation, il est avantageux, pour faciliter la fabrication et en diminuer le coût, de choisir comme éléments de renforcement de ces nappes des tronçons ou des ensembles de tronçons de câbles, de longueur circonférentielle inférieure à la longueur circonférentielle de l'axe moyen de la tringle, lieu géométrique des centres de gravité des sections méridiennes de ladite tringle. Les interstices ou coupures circonférentielles entre tronçons ou ensembles coupés seront préférentiellement décalés les uns par rapport aux autres.

Les caractéristiques et avantages de l'invention seront mieux compris à l'aide de la description qui suit et qui se réfère au dessin, illustrant à titre non limitatif des exemples nombreux d'exécution, et sur lequel :
- la figure 1 représente schématiquement une première variante de bourrelet conforme à l'invention, dans sa version la plus dépouillée ;
- la figure 2 représente schématiquement une deuxième variante de bourrelet conforme à l'invention, avec brin axialement intérieur prolongé ;
- la figure 3 représente schématiquement une troisième variante de bourrelet conforme à l'invention, avec deux brins, axialement extérieur et axialement intérieur, prolongés ;
- la figure 4 représente schématiquement une autre variante de bourrelet conforme à l'invention, avec un brin intérieur prolongé et un raidisseur extérieur ;
- la figure 5 représente schématiquement une autre variante de bourrelet conforme à l'invention, avec deux nappes additionnelles d'éléments circonférentiels ;
- la figure 6 représente schématiquement une autre variante de bourrelet conforme à l'invention, avec deux nappes additionnelles entourant la tringle ;
- la figure 7 est une variante de la figure 6.
- la figure 8 représente schématiquement une dernière variante de l'invention, dans laquelle une nappe de renfort est placée axialement à l'intérieur du pneumatique.

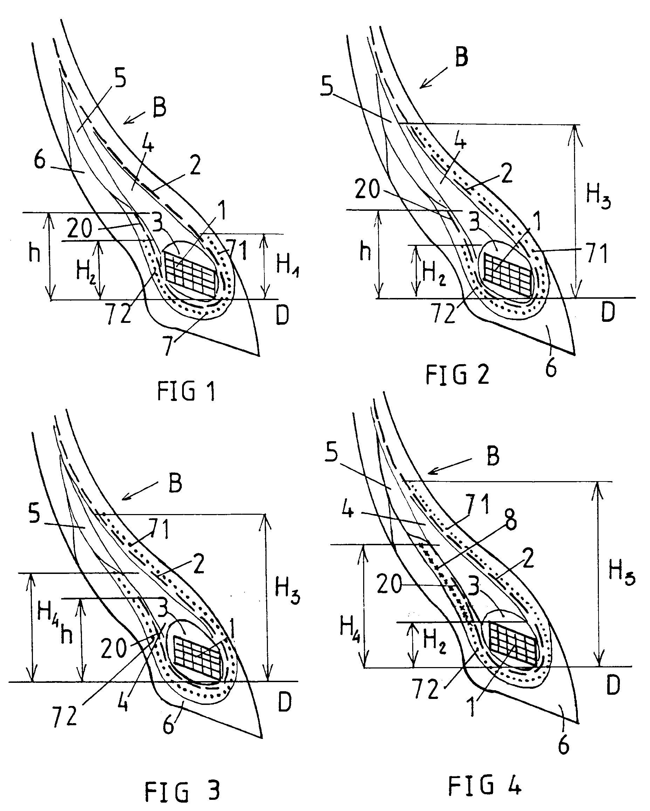

Le bourrelet B représenté sur la figure 1 est celui d'un pneumatique E 22.5 XZA, destiné à être monté sur une jante comportant des sièges de jante inclinés à 15°. Ledit bourrelet est renforcé par une tringle (1) formée par l'enroulement sur une forme appropriée d'un fil à section quadrilatère jusqu'à obtention de plusieurs rangées de fils radialement juxtaposées. Autour de ladite tringle (1) est ancrée une armature de carcasse (2) composée d'une seule nappe de câbles métalliques. L'ancrage se fait par un retournement (20) autour de la couche (3) de mélange caoutchouteux qui recouvre la tringle (1), la distance radiale h séparant l'extrémité radialement supérieure dudit retournement (20), de la droite parallèle à l'axe de rotation et passant par le point de la tringle (1) le plus rapproché dudit axe de rotation dite droite de référence D, étant égale, dans l'exemple étudié du pneumatique de dimension E 22.5 XZA, à 0,12 fois la hauteur H du pneumatique sur jante, cette dernière étant la distance radiale séparant le point du pneumatique radialement le plus éloigné de l'axe de rotation de la droite de mesure du diamètre nominal de la jante de montage, et égale à 254 mm. Entre l'armature de carcasse (2) et son retournement (20), radialement au dessus de la tringle (1), est disposé un bourrage tringle (4) en mélange caoutchouteux de dureté Shore généralement élevée, l'extrémité radialement supérieure dudit bourrage (4) étant sensiblement située au niveau de la largeur axiale maximale du pneumatique. Axialement à l'extérieur du retournement (20) et du bourrage tringle (4) se trouve un deuxième bourrage (5) de remplissage, et le bourrelet B est entouré d'un mélange caoutchouteux de protection (6).

A l'extérieur de l'armature de carcasse et de son retournement, radialement en dessous et axialement à l'intérieur et à l'extérieur une nappe additionnelle (7) est enroulée autour de la tringle (1) de manière à former deux brins, un brin axialement intérieur (71) et un brin axialement extérieur (72). Les extrémités radialement supérieures respectivement des deux brins (71) et (72) sont situées par rapport à la droite de référence à des hauteurs H₁ et H₂ sensiblement égales, dans l'exemple étudié, entre elles et à la distance de 27 mm séparant le point de la couche (3) d'enrobage de la tringle (1) le plus éloigné de l'axe de rotation de la droite de référence D, distance supérieure à celle séparant le point de la tringle (1) le plus éloigné de l'axe de rotation de la droite de référence D.

Sur la figure 2, le brin axialement intérieur (71) est nettement plus long que le brin axialement extérieur (72), son extrémité radialement supérieure étant située à une distance H₃, de la droite de référence D, égale à 0,24 H et donc supérieure à la hauteur h de l'extrémité radialement supérieure du retournement de l'armature de carcasse et supérieure à la hauteur H₂ de l'extrémité radialement supérieure du brin extérieur de la nappe additionnelle de renforcement (7), hauteur égale à 27 mm, comme dans le cas de la figure 1.

Sur la figure 3, le brin extérieur (72) a été prolongé de sorte que son extrémité radialement supérieure soit à une distance H₄ de la droite de référence D. La distance H₄ est inférieure à la hauteur H₃ du brin axialement intérieur, mais supérieure à la hauteur h de l'extrémité du retournement de la nappe de carcasse (2). Dans l'exemple étudié du pneumatique de dimension E 22.5 XZA, la hauteur H₄ est égale à 40 mm.

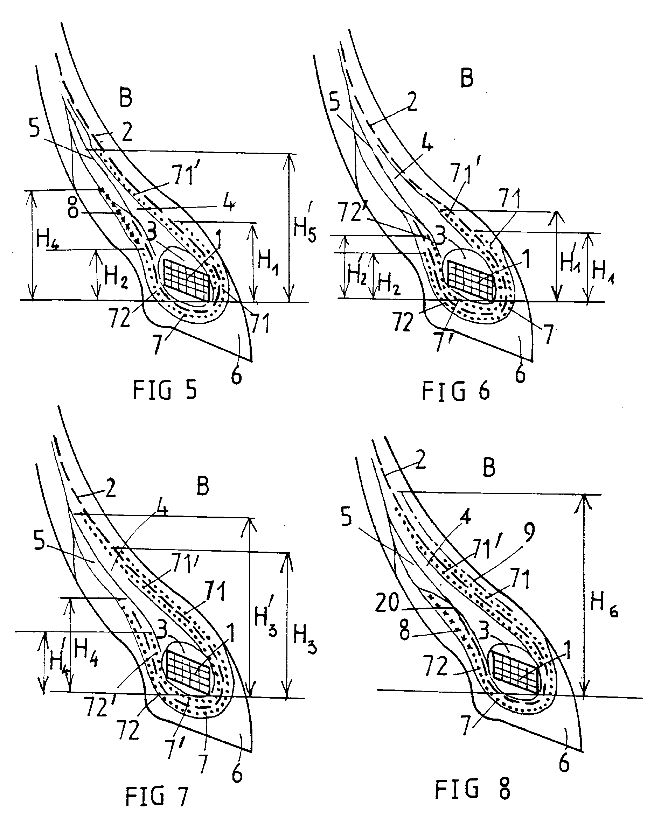

Comparativement à la variante représentée sur la figure 3, la figure 4 représente un bourrelet B dans lequel le brin axialement extérieur (72) possède une hauteur H₂ sensiblement égale à la distance séparant le point de la tringle (1) le plus éloigné de l'axe de rotation de la droite de référence D, et se trouve prolongé radialement à l'extérieur par la nappe de renforcement de bourrelet ou raidisseur (8) couramment utilisé dans les pneumatiques de l'art connu, ce raidisseur étant constitué de câbles métalliques faisant avec la direction circonférentielle un angle de 22°, et ayant une extrémité radialement supérieure à une hauteur sensiblement égale à H₄.

Sur la figure 5, le bourrelet B comprend deux nappes additionnelles (7) et (7'), la première nappe (7) étant une nappe additionnelle telle que décrite précédemment et conformément à la figure 1, la deuxième nappe additionnelle (7') étant disposée à l'intérieur de la nappe de carcasse (2) et de son retournement (20). Dans le cas montré, la nappe additionnelle (7') ne comprend qu'un seul brin (71') axialement à l'intérieur, l'extrémité radialement inférieure dudit brin (71') étant radialement sensiblement au même niveau que le point de la tringle le plus proche de l'axe de rotation et l'extrémité radialement supérieure étant, située à une distance H'₅, mesurée par rapport à la droite de référence D, supérieure à la hauteur h de l'extrémité du retournement (20) de la nappe de carcasse (2). Comme montré, le brin axialement extérieur (72) de la première nappe additionnelle (7) peut aussi être avantageusement prolongé radialement à l'extérieur par un raidisseur (8) usuel, de câbles métalliques faisant avec la direction circonférentielle un angle de 22°, et ayant une extrémité radialement supérieure à une hauteur sensiblement égale à la hauteur H₄ de la figure 3.

La deuxième nappe additionnelle (7') peut s'enrouler autour de la tringle (1) pour former alors deux brins : un premier brin axialement intérieur (71') et un brin axialement extérieur (72'), dont les extrémités radialement supérieures respectives sont radialement situées au dessus d'une droite parallèle à l'axe de rotation et passant par le point de la tringle (1) le plus éloigné dudit axe de rotation, par exemple à des hauteurs H'₁ et H'₂ par rapport à la droite de référence D. Lesdites hauteurs peuvent être sensiblement égales entre elles, et légèrement différentes des hauteurs H₁ et H₂ décrites précédemment, comme montré sur la figure 6. En effet et dans ce cas, comme connu en soi, il est préférable que les extrémités des brins de nappes ne concordent pas.

Dans ce dernier cas aussi, où le brin axialement extérieur (72) de la première nappe additionnelle (7) a une extrémité radialement supérieure située approximativement au niveau de la droite passant par le point de la tringle le plus éloigné de l'axe de rotation, il peut aussi être avantageusement prolongé radialement à l'extérieur par un raidisseur (8) usuel, ayant une extrémité radialement supérieure à une hauteur sensiblement égale à la hauteur H₄ de la figure 4.

Les distances qui séparent les extrémités des brins (71', 72') de la deuxième nappe additionnelle (7') de la droite de référence D peuvent aussi être différentes entre elles. De préférence, pour permettre un meilleur renforcement des bourrelets, l'extrémité radialement supérieure du brin axialement intérieur (71') de la deuxième nappe additionnelle (7') sera distante de la droite de référence d'une distance H'₃ supérieure à la hauteur du retournement de la nappe de carcasse et supérieure dans tous les cas à la distance H₃ séparant l'extrémité radialement supérieure du brin axialement intérieur (71) de la première nappe additionnelle (7). Quant à l'extrémité radialement supérieure du brin axialement extérieur (72') de la deuxième nappe additionnelle (7'), elle est avantageusement située au dessous de l'extrémité radialement supérieure du retournement (20) de la nappe de carcasse (2). C'est l'exemple qui est représenté sur la figure 7, où l'extrémité radialement supérieure du brin axialement extérieur (72') de la nappe additionnelle (7') est située à une distance H'₄ de la droite de référence D, inférieure à la distance H₄ séparant l'extrémité radialement supérieure du brin axialement extérieur de la première nappe additionnelle (7) de ladite droite de référence D, et inférieure à la hauteur h du retournement de la nappe de carcasse (2). Les valeurs de H₄, h, H'₄ peuvent être, pour la dimension de pneumatique donnée en exemple, respectivement égales à 40 mm, 31 mm, 18 mm. Par contre, les valeurs respectives de H₃ et de H'₃ seront égales à 61 mm et 81 mm.

Une dernière variante avantageuse, montrée sur la figure 8, consiste à placer axialement à l'intérieur sur le brin axialement intérieur (71) de la nappe additionnelle (7) enroulée à l'extérieur de la nappe de carcasse (2) une nappe de renfort (9) de fils ou câbles métalliques orientés à 90° par rapport à la direction circonférentielle, dont l'extrémité radialement supérieure est distante de la droite de référence D d'une valeur H₆ supérieure à toutes les valeurs de hauteur énoncées de manière à recouvrir l'extrémité radialement extérieure du brin axialement intérieur (71) de la nappe additionnelle (7), et dont l'extrémité radialement inférieure est sensiblement au droit du point du bourrage d'enrobage (3) de la tringle (1) le plus éloigné de l'axe de rotation.

Dans tous les exemples décrits, les nappes additionnelles (7) et (7') quelles que soient les hauteurs de leurs brins, sont constituées de tronçons de câbles métalliques 27.23 NF, un tronçon ayant une longueur circonférentielle de 500 mm, ce qui est très inférieur à la longueur circonférentielle du centre de gravité de la section méridienne de la tringle qui est de 1845 mm. Ces tronçons sont circonférentiellement espacés par des interstices de caoutchouc de longueur circonférentielle sensiblement égales à 4 mm pour la portion de nappe additionnelle la plus proche de l'axe de rotation, et de valeur croissante au fur et à mesure que l'on s'éloigne dudit axe de rotation, lesdits interstices étant décalés circonférentiellement de sorte que soit présent un seul interstice sur une largeur de nappe additionnelle. L'emploi de tronçons coupés permet une certaine élasticité primaire facilitant dans certains modes de fabrication la conformation des nappes additionnelles, et il est évident qu'il est possible d'utiliser en lieu et place de ces éléments métalliques coupés des éléments jugés équivalents, et en particulier des câbles à deux élasticités, c'est-à-dire s'allongeant facilement jusqu'à un certain allongement relatif pour présenter ensuite une extensibilité pratiquement nulle, ou alors des câbles ondulés sur plan.

## Revendications

1. Pneumatique comprenant une armature de carcasse radiale (2), ancrée dans chaque bourrelet B à au moins une tringle (1) pour former un retournement (20) de hauteur h, chaque bourrelet B étant renforcé par au moins une nappe additionnelle de renforcement formée d'éléments métalliques, telle que, vu en section méridienne, la nappe de renforcement (7) d'éléments métalliques est enroulée autour de la tringle (1), à l'extérieur de la partie enroulée de l'armature de carcasse (2), de sorte que les extrémités radialement supérieure du brin axialement extérieur (72) et radialement supérieure du brin axialement intérieur (71) soient radialement situées au dessus d'une droite parallèle à l'axe de rotation et passant par le point de la tringle (1) le plus éloigné dudit axe de rotation, caractérisé en ce que la nappe de renforcement (7) est composée d'éléments métalliques circonférentiels.

2. Pneumatique selon la revendication 1, caractérisé en ce que le brin axialement extérieur (72) possède une extrémité radialement supérieure distante de la droite de référence D d'une hauteur H₂ sensiblement équivalente à la distance séparant le point de la tringle (1) le plus éloigné de l'axe de rotation de ladite droite D et en ce que le brin axialement intérieur (71) de la nappe additionnelle (7) d'éléments circonférentiels est prolongé radialement à l'extérieur, jusqu'à une hauteur radiale H₃ au plus égale à 0,35 H et supérieure à h, lesdites hauteurs radiales H₃ et h étant mesurées par rapport à une droite de référence D, parallèle à l'axe de rotation et passant par le point de la tringle (1) radialement le plus rapproché de l'axe de rotation et H étant la hauteur sur jante du pneumatique.

3. Pneumatique selon la revendication 1, caractérisé en ce que le brin extérieur (72) de la nappe additionnelle (7) est prolongé de sorte que son extrémité radialement supérieure soit à une distance H₄ de la droite de référence D, la distance H₄ étant inférieure à la hauteur H₃ du brin axialement intérieur (71), mais supérieure à la hauteur h de l'extrémité du retournement (20) de la nappe de carcasse (2).

4. Pneumatique selon l'une des revendications 1 ou 2, caractérisé en ce que le brin axialement extérieur (72) possédant une extrémité radialement supérieure distante de la droite de référence D d'une hauteur H₂ sensiblement équivalente à la distance séparant le point de la tringle (1) le plus éloigné de l'axe de rotation de ladite droite D, est prolongé radialement à l'extérieur par une nappe de renforcement de bourrelet ou raidisseur (8), constitué de câbles métalliques faisant avec la direction circonférentielle un angle de 22° et ayant une extrémité radialement supérieure à une hauteur sensiblement égale à H₄, la distance H₄ étant inférieure à la hauteur H₃ du brin axialement intérieur (71), mais supérieure à la hauteur h de l'extrémité du retournement (20) de la nappe de carcasse (2).

5. Pneumatique selon l'une des revendications 1 à 4, caractérisé en ce que les bourrelets B comprennent aussi une deuxième nappe additionnelle (7').

6. Pneumatique selon la revendication 5 caractérisé en ce que la deuxième nappe additionnelle (7') ne comprend qu'un seul brin (71') axialement à l'intérieur, l'extrémité radialement inférieure dudit brin (71') étant radialement sensiblement au même niveau que le point de la tringle le plus proche de l'axe de rotation et l'extrémité radialement supérieure étant, située à une distance H'₅, mesurée par rapport à la droite de référence D, supérieure à la hauteur h de l'extrémité du retournement (20) de la nappe de carcasse (2).

7. Pneumatique selon la revendication 5, caractérisé en ce que la deuxième nappe additionnelle (7') s'enroule autour de la tringle (1) pour former deux brins : un premier brin axialement intérieur (71') et un brin axialement extérieur (72'), dont les extrémités radialement supérieures respectives soient radialement situées au dessus d'une droite parallèle à l'axe de rotation et passant par le point de la tringle (1) le plus éloigné dudit axe de rotation.

8. Pneumatique selon la revendication 7, caractérisé en ce que l'extrémité radialement supérieure du brin axialement intérieur (71') de la nappe additionnelle extérieure (7') est située à une distance radiale H'₃ de la droite de référence D, plus grande que la hauteur h du retournement de la nappe de carcasse (2), et supérieure à la distance radiale H₃ séparant l'extrémité radialement supérieure du brin axialement intérieur (71) de la première nappe additionnelle (7).

9. Pneumatique selon l'une des revendications 7 ou 8, caractérisé en ce que l'extrémité radialement supérieure du brin extérieur (72') de la nappe additionnelle (7') est distante de la droite de référence d'une quantité H'₄, inférieure à la hauteur h de l'extrémité du retournement de la nappe de carcasse (2).

10. Pneumatique selon l'une des revendications 1 à 9, caractérisé en ce que l'extrémité du brin axialement intérieur (71) de la première nappe additionnelle (7) est recouvert d'une nappe de renfort (9), constituée de câbles métalliques radiaux.

11. Pneumatique selon l'une des revendications 1 à 10, caractérisé en ce que les éléments de renforcement des nappes de renforcement (7, 7') additionnelles sont des tronçons ou des ensembles de tronçons de câbles de longueur circonférentielle inférieure à la longueur circonférentielle de l'axe moyen de la tringle.

## Claims

1. A tyre comprising a radial carcass reinforcement (2), anchored in each bead B to at least one bead wire (1) to form an upturn (20) of height h, each bead B being reinforced by at least one additional reinforcement ply formed of metallic elements, such that, viewed in meridian section, the reinforcement ply (7) of metallic elements is wound around the bead wire (1) to the outside of the wound part of the carcass reinforcement (2), such that the radially upper ends of the axially outer strand (72) and of the axially inner strand (71) are radially located above a straight line parallel to the axis of rotation and passing through the point of the bead wire (1) farthest from said axis of rotation, characterised in that the reinforcement ply (7) is formed of circumferential metallic elements.

2. A tyre according to Claim 1, characterised in that the axially outer strand (72) has a radially upper end distant from the reference straight line D by a height H₂ substantially equivalent to the distance between the point of the bead wire (1) farthest from the axis of rotation of said straight line D and in that the axially inner strand (71) of the additional ply (7) of circumferential elements is extended radially to the outside up to a radial height H₃ of at most 0.35 H and greater than h, said radial heights H₃ and h being measured relative to a reference straight line D parallel to the axis of rotation and passing through the point of the bead wire (1) which is radially closest to the axis of rotation and H being the height on rim of the tyre.

3. A tyre according to Claim 1, characterised in that the outer strand (72) of the additional ply (7) is extended such that its radially upper end is at a distance H₄ from the reference straight line D, the distance H₄ being less than the height H₃ of the axially inner strand (71), but greater than the height h of the end of the upturn (20) of the carcass ply (2).

4. A tyre according to one of Claims 1 or 2, characterised in that the axially outer strand (72) having a radially upper end distance from the reference straight line D by a height H₂ substantially equivalent to the distance between the point of the bead wire (1) farthest from the axis of rotation of said straight line D is extended radially to the outside by a bead reinforcement ply or stiffener (8) formed of metal cables forming an angle of 22° with the circumferential direction, and having a radially upper end at a height substantially equal to H₄, the distance H₄ being less than the height H₃ of the axially inner strand (71), but greater than the height h of the end of the upturn (20) of the carcass ply (2).

5. A tyre according to one of Claims 1 to 4, characterised in that the beads B also comprise a second additional ply (7').

6. A tyre according to Claim 5, characterised in that the second additional ply (7') comprises only a single strand (71') axially to the inside, the radially lower end of said strand (71') being radially substantially at the same level as the point of the bead wire closest to the axis of rotation and the radially upper end being located at a distance H'₅, measured relative to the reference straight line D, greater than the height h of the end of the upturn (20) of the carcass reinforcement (2).

7. A tyre according to Claim 5, characterised in that the second additional ply (7') winds around the bead wire (1) to form two strands: a first axially inner strand (71') and an axially outer strand (72'), the respective radially upper ends of which are radially located above a straight line parallel to the axis of rotation and passing through the point of the bead wire (1) farthest from said axis of rotation.

8. A tyre according to Claim 7, characterised in that the radially upper end of the axially inner strand (71') of the outer additional ply (7') is located at a radial distance H'₃ from the reference straight line D which is greater than the height h of the upturn of the carcass ply (2) and greater than the radial distance H₃ between the radially upper end of the axially inner strand (71) of the first additional ply (7).

9. A tyre according to one of Claims 7 or 8, characterised in that the radially upper end of the outer strand (72') of the additional ply (7') is distant from the reference straight line by a quantity H'₄ which is less than the height h of the end of the upturn of the carcass ply (2).

10. A tyre according to one of Claims 1 to 9, characterised in that the end of the axially inner strand (71) of the first additional ply (7) is covered by a reinforcement ply (9), formed of radial metal cables.

11. A tyre according to one of Claims 1 to 10, characterised in that the reinforcement elements for the additional reinforcement plies (7, 7') are lengths or assemblies of lengths of cables of a circumferential length less than the circumferential length of the centre axis of the bead wire.

## Patentansprüche

1. Luftreifen mit einer radialen Karkassenbewehrung (2), die in jedem Wulst B an mindestens einem Wulstkern (1) verankert ist, um einen Umschlag (20) mit einer Höhe h zu bilden, wobei jeder Wulst B durch mindestens eine zusätzliche Verstärkungslage verstärkt ist, die aus Metallelementen gebildet ist, und zwar derart, daß, im Meridianschnitt gesehen, die Verstärkungslage (7) aus Metallelementen rund um den Wulstkern (1) herumgeschlagen ist, und zwar auf der Außenseite des herumgeschlagenen Teils der Karkassenbewehrung (2), derart, daß das radial obere Ende des axial außenliegenden Trums (72) und das radial obere Ende des axial innenliegenden Trums (71) radial über einer Geraden liegen, die parallel zur Drehachse verläuft und durch den Punkt des Wulstkerns (1) hindurchläuft, der von der genannten Drehachse am weitesten entfernt ist, dadurch gekennzeichnet, daß die Verstärkungslage (7) aus in Umfangsrichtung verlaufenden Metallelementen zusammengesetzt ist.

2. Luftreifen nach Anspruch 1, dadurch gekennzeichnet, daß das axial außenliegende Trum (72) ein radial oberes Ende aufweist, das zur Bezugsgeraden D um eine Höhe H₂ beabstandet ist, die im wesentlichen äquivalent ist zum Abstand, der den Punkt des Wulstkerns (1), der von der Drehachse am weitesten entfernt ist, von der genannten Geraden D trennt, und daß das axial innenliegende Trum (71) der zusätzlichen Lage (7) aus Umfangselementen radial auf der Außenseite bis zu einer radialen Höhe H₃ verlängert ist, die höchstens gleich 0,35 H beträgt und größer ist als h, wobei die genannten radialen Höhen H₃ und h in Bezug auf eine Bezugsgerade D gemessen werden, die parallel ist zur Drehachse und durch den Punkt des Wulstkerns (1) hindurchläuft, der radial der Drehachse nächstgelegen ist, und wobei H die Höhe über der Felge des Reifens ist.

3. Luftreifen nach Anspruch 1, dadurch gekennzeichnet, daß das außenliegende Trum (72) der zusätzlichen Lage (7) derart verlängert ist, daß sein radial oberes Ende unter einem Abstand von H₄ zur Bezugsgeraden D liegt, wobei der Abstand H₄ kleiner ist als die Höhe H₃ des axial innenliegenden Trums (71), aber größer als die Höhe h des Endes des Umschlages (20) der Karkassenlage (2).

4. Luftreifen nach einem der Ansprüche 1 oder 2, dadurch gekennzeichnet, daß das radial außenliegende Trum (72), das ein radial oberes Ende besitzt, das zur Bezugsgeraden D mit einer Höhe H₂ beabstandet ist, die im wesentlichen äquivalent ist dem Abstand, der den von der Drehachse am weitesten entfernten Punkt des Wulstkerns (1) von der genannten Geraden D trennt, radial auf der Außenseite um eine Wulst-Verstärkungslage oder Aussteifungs-Verstärkungslage (8) verlängert ist, die aus Metallseilen gebildet ist, die mit der Umfangsrichtung einen Winkel von 22° bilden, und ein Ende aufweist, das radial über einer Höhe liegt, die im wesentlichen gleich H₄ beträgt, wobei der Abstand H₄ kleiner ist als die Höhe H₃ der radial inneren Trums (71), aber größer als die Höhe h des Endes des Umschlages (20) der Karkassenlage (2).

5. Luftreifen nach einem der Ansprüche 1 bis 4, dadurch gekennzeichnet, daß die Wülste B auch eine zweite zusätzliche Lage (7') aufweisen.

6. Luftreifen nach Anspruch 5, dadurch gekennzeichnet, daß die zweite zusätzliche Lage (7') nur ein einziges, axial innenliegendes Trum (71') aufweist, wobei das radial untere Ende des genannten Trums (71') radial im wesentlichen auf der selben Höhe liegt wie der Punkt des Wulstkerns, der der Drehachse nächstgelegen ist, und das radial obere Ende, das unter einem Abstand H'₅ gelegen ist, gemessen in Bezug auf die Bezugsgerade D, der größer ist als die Höhe h des Endes des Umschlages (20) der Karkassenlage (2).

7. Luftreifen nach Anspruch 5, dadurch gekennzeichnet, daß die zweite, zusätzliche Lage (7') sich um den Wultskern (1) herumschlägt, um zwei Trums zu bilden: ein erstes, axial innenliegendes Trum (71') und ein axial außenliegendes Trum (72'), von denen die jeweiligen radial oberen Enden radial über einer Geraden gelegen sind, die parallel zur Drehachse verläuft und durch den Punkt des Wulstkerns (1) hindurchläuft, der von der genannten Drehachse am weitesten entfernt ist.

8. Luftreifen nach Anspruch 7, dadurch gekennzeichnet, daß das radial obere Ende des axial innenliegenden Trums (71') der zusätzlichen, äußeren Lage (7') unter einem radialen Abstand H'₃ von der Bezugsgeraden D gelegen ist, der größer ist als die Höhe h des Umschlages der Karkassenlage (2), und größer als der radiale Abstand H₃, der das axial obere Ende vom axial innenliegenden Trum (71) der ersten zusätzlichen Lage (7) trennt.

9. Luftreifen nach einem der Ansprüche 7 oder 8, dadurch gekennzeichnet, daß das radial obere Ende des außenliegenden Trums (72') der zusätzlichen Lage (7') von der Bezugsgeraden um einen Abstand H'₄ getrennt ist, der höher ist als die Höhe h des Endes des Umschlages der Karkassenlage (2).

10. Luftreifen nach einem der Ansprüche 1 bis 9, dadurch gekennzeichnet, daß das Ende des axial innenliegenden Trums (71) der ersten zusätzlichen Lage (7) mit einer Verstärkungslage (9) abgedeckt ist, die von radialen Metallseilen gebildet ist.

11. Luftreifen nach irgendeinem der Ansprüche 1 bis 10, dadurch gekennzeichnet, daß die Verstärkungselemente der zusätzlichen Verstärkungslagen (7, 7') Stücke oder Gruppen von Stücken von Seilen mit einer Umfangslänge sind, die kleiner ist als die Umfangslänge der Mittelachse des Wulstkerns.
